# EUROPÄISCHE PATENTANMELDUNG

(11) **EP 2 484 481 A1**
(43) Veröffentlichungstag der Anmeldung: **08.08.2012**
(21) Anmeldenummer: 12152794.9
(22) Anmeldetag: 27.01.2012
(51) Int. Cl.: B23P 6/00, F01D 5/00

(54) **Verfahren zum Reparieren bzw. Rekonditionieren eines stark beschädigten Bauteils, insbesondere aus dem Heissgasbereich einer Gasturbine**

(30) Priorität: 03.02.2011 CH 1972011
(71) Anmelder: Alstom Technology Ltd, 5400 Baden (CH)
(72) Erfinder: Rickenbacher, Lukas Emanuel, 4053 Basel (CH); Hövel, Simone, 5408 Ennetbaden (CH); Spierings, Adriaan Bernardus, 9300 Wittenbach (CH); Schmid, Raphael, 9000 St. Gallen (CH); Buob, Stefan, 8404 Winterthur (CH)

(57) **Zusammenfassung**

Die Erfindung betrifft ein Verfahren zum Reparieren bzw. Rekonditionieren eines stark beschädigten Bauteils (10), insbesondere aus dem Heissgasbereich einer Gasturbine.

Eine einfache Handhabung bei verbesserter Flexibilität und Produktivität wird durch folgende Schritte erreicht:
a) Bearbeiten des beschädigten Bauteils (10) durch Entfernen des beschädigten Bereichs (14) aus dem Bauteil (10) unter Erzeugung eines entsprechenden Ausschnitts (15) im Bauteil (10);
b) Ausmessen des mit dem Ausschnitt (15) versehenen bearbeiteten Bauteils (B);
c) Erstellen eines CAD-Modells (E_{CAD}) eines Ersatzstückes zum Einsetzen in den Ausschnitt (15) des bearbeiteten Bauteils (B);
d) Herstellen des Ersatzstückes nach Massgabe des erstellten CAD-Modells (E_{CAD}) und
e) Verbinden des hergestellten Ersatzstückes und des bearbeiteten Bauteils (B) durch Fügen.

## Beschreibung

### TECHNISCHES GEBIET

Die vorliegende Erfindung bezieht sich auf das Gebiet der Bearbeitung von fertigen Bauteilen. Sie betrifft ein Verfahren zum Reparieren bzw. Rekonditionieren eines stark beschädigten Bauteils, insbesondere aus dem Heissgasbereich einer Gasturbine.

### STAND DER TECHNIK

Gasturbinen haben heutzutage aus Gründen eines guten Wirkungsgrades Betriebstemperaturen im Heissgasbereich von über 1400 °C. Es ist daher nicht verwunderlich, dass eine Vielzahl von Bauteilen der Gasturbinen, wie zum Beispiel Laufschaufeln, Leitschaufeln oder Brennkammerauskleidungen, grossen thermischen aber auch mechanischen Belastungen ausgesetzt sind. Da diese Bauteile üblicherweise aus teuren Hochtemperaturmaterialien hergestellt sind, ist es wünschenswert, sie zu reparieren, anstatt sie vollständig zu ersetzen, wenn sie beschädigt sind. Darüber hinaus besteht häufig das Bedürfnis, bereits eingebaute Bauteile zu überarbeiten (Upgrade), um sie in ihrer Wirkungsweise zu verbessern oder an sich ändernde Betriebsbedingungen anzupassen.

In der Druckschrift EP 1 620 225 B1 ist ein Verfahren zur Reparatur und/oder Modifikation von Bauteilen einer Gasturbine offenbart, bei dem zuerst zumindest ein Abschnitt des zu reparierenden oder zu modifizierenden Bauteils aus dem Bauteil herausgearbeitet, insbesondere herausgetrennt wird. Anschliessend wird zumindest bei der ersten Reparatur oder Modifikation dieses Abschnitts des Bauteils ein Datensatz für ein herzustellendes Ersatzteil erzeugt. Das Ersatzteil wird darauffolgend mit Hilfe eines Rapid-Manufacturing-Prozesses hergestellt.

Nach oder auch vor dem Herausarbeiten, insbesondere Heraustrennen des insbesondere beschädigten Abschnitts sowie ggf. eines an den beschädigten Abschnitt anschliessenden Toleranzabschnitts aus dem zu reparierenden Bauteil wird ein Datensatz für das herzustellende Ersatzteil erzeugt. In diesem Zusammenhang wird zuerst ein dreidimensionaler CAD-Datensatz für das herzustellende Ersatzteil erzeugt. Dieser 3D-CAD-Datensatz für das herzustellende Ersatzteil wird anschliessend in einen Maschinendatensatz umgewandelt. Zuerst wird überprüft, ob ein 3D-CAD-Datensatz für das zu reparierende oder zu modifizierende, jedoch unbeschädigte Bauteil bzw. ein entsprechendes Neuteil vorliegt. Nachteilig ist dabei, dass ein individueller Verzug (oder Verzug einer Reihe) durch den Betrieb nicht berücksichtigt werden kann. Dadurch entsteht immer eine Diskrepanz (Mismatch) zwischen aktueller und nominaler Geometrie. Liegt ein solcher 3D-CAD-Datensatz für das unbeschädigte Bauteil vor, so wird anschliessend überprüft, ob erstens eine systematische Beschädigung des Bauteils vorliegt und ob zweitens die Geometrie des beschädigten Bauteils reproduzierbar ist. In dem Fall, in dem sowohl eine systematische Beschädigung des Bauteils vorliegt, als auch gleichzeitig die Geometrie des beschädigten Bauteils reproduzierbar ist, kann anhand statistischer Auswertungen der Grösse des beschädigten Abschnitts des zu reparierenden Bauteils sowie unter Berücksichtung eines sich an den beschädigten Abschnitt anschliessenden Toleranzabschnitts, der vorgeschädigte Werkstoffbereiche sowie stark beanspruchte Bereiche des Bauteils bei der Reparatur berücksichtigt, die erforderliche Geometrie des herzustellenden Ersatzteils abgeleitet werden und daraus der 3D-CAD-Datensatz generiert werden.

Liegt hingegen keine systematische Beschädigung des zu reparierenden Bauteils vor und/oder ist die Geometrie des beschädigten oder zu modifizierenden Bauteils nicht reproduzierbar, so wird ein Reverse Engineering des Bauteils oder zumindest der relevanten Bauteilbereiche durchgeführt. Zur Durchführung des Reverse Engineerings des Bauteils oder Bauteilbereichs wird zuerst der insbesondere beschädigte Abschnitt sowie ggf. zusätzlich der sich an den beschädigten Abschnitt anschliessende Toleranzabschnitt aus dem beschädigten, zu reparierenden Bauteil herausgearbeitet. Anschliessend erfolgt eine Vermessung des Bauteils oder Bauteilbereichs, z. B. durch mechanische oder optische Messwertaufnehmer oder durch Computertomografie und anschliessende Flächenrückführung. Als Ergebnis erhält man einen 3D-CAD-Datensatz des beschädigten oder zu modifizierenden Bauteils oder Bauteilbereichs, aus dem zuvor der beschädigte Abschnitt und ggf. ein Toleranzabschnitt herausgearbeitet worden sind. Aus diesem 3D-CAD-Datensatz des bearbeiteten Bauteils oder Bauteilbereichs wird durch Differenzbildung mit dem 3D-CAD-Datensatz des unbeschädigten Bauteils der 3D-CAD-Datensatz des herzustellenden Ersatzteils ermittelt.

Ein solches Reverse Engineering ist jedoch insgesamt sehr aufwändig.

Aus der WO2008/034413 ist ein Reparaturverfahren für Laufschaufeln einer Gasturbine bekannt, bei dem ein beschädigter Abschnitt einer beschädigten Schaufelspitze unter Ausbildung einer Trennfläche entfernt wird und dann auf der Trennfläche mittels eines generativen Verfahrens (Rapid Manufacturing) unter Verwendung von dreidimensionalen CAD-Konstruktionsdaten der Laufschaufel der entfernte Abschnitt neu aufgebaut wird. Eine solche Reparaturmethode bringt erhebliche Einschränkungen betreffend die Materialauswahl und Geometrie mit sich.

Die Druckschrift W02008/046386 offenbart den Aufbau eines kompletten Gasturbinenbauteils durch ein solches Rapid-Manufacturing-Verfahren.

Generelle Verfahren zur Erzeugung von dreidimensionalen Teilen, auf die im Verlaufe der Beschreibung weiter unten Bezug genommen wird, sind beispielsweise aus den Druckschriften EP 946325, DE 10219983, EP 1358855, US 6355086, US 6811744 und US 7537722 bekannt.

### DARSTELLUNG DER ERFINDUNG

Es ist daher eine Aufgabe der Erfindung, ein Verfahren zum Reparieren bzw. Rekonditionieren eines stark beschädigten Bauteils anzugeben, welches ohne parametrisiertes CAD-Modell des Bauteils und des den beschädigten Bereich umfassenden Ausschnitt-Teils auskommt, sich einfach und flexibel anwenden lässt und sich durch eine reduzierte Ausschussrate auszeichnet.

Die Aufgabe wird durch die Gesamtheit der Merkmale des Anspruchs 1 gelöst. Das erfindungsgemässe Verfahren zum Reparieren bzw. Rekonditionieren eines stark beschädigten Bauteils, insbesondere aus dem Heissgasbereich einer Gasturbine, zeichnet sich durch folgende Schritte aus:
a) Bearbeiten des beschädigten Bauteils durch Entfernen des beschädigten Bereichs aus dem Bauteil unter Erzeugung eines entsprechenden Ausschnitts im Bauteil;
b) Ausmessen des mit dem Ausschnitt versehenen bearbeiteten Bauteils;
c) Erstellen eines CAD-Modells eines Ersatzstückes zum Einsetzen in den Ausschnitt des bearbeiteten Bauteils;
d) Herstellen des Ersatzstückes nach Massgabe des erstellten CAD-Modells und
e) Verbinden des hergestellten Ersatzstückes und des bearbeiteten Bauteils durch Fügen.

Eine Ausgestaltung des erfindungsgemässen Verfahrens ist dadurch gekennzeichnet, dass zum Ausschneiden des beschädigten Bereichs eine individuelle Schnittlinie definiert wird.

Gemäss einer anderen Ausgestaltung der Erfindung erfolgt das Entfernen des beschädigten Bereichs durch einen Bearbeitungsprozess. Insbesondere kann als Bearbeitungsprozess ein EDM-Prozess eingesetzt werden. Es ist aber auch denkbar, dass als Bearbeitungsprozess ein Fräsprozess eingesetzt wird.

Dabei kann der Bearbeitungsprozess vereinfachend ohne Rücksicht auf den Erhalt der Geometrie eines Ausschnitt-Teils durchgeführt werden. In einem solchen Fall kann als Schnittlinie eine komplexe Linie verwendet wird.

Eine andere Ausgestaltung der Erfindung ist dadurch gekennzeichnet, dass das beschädigte Bauteil vor der Bearbeitung ebenfalls ausgemessen wird.

Insbesondere kann das Ausmessen mittels eines mechanisch oder optisch tastenden Verfahrens durchgeführt werden. Vorzugsweise wird zum Ausmessen ein 3-D-Scanverfahren eingesetzt.

Gemäss einer weiteren Ausgestaltung wird die Aussenkontur des Ersatzstückes auf der Basis von Messdaten durch CAD-Modellierung virtuell rekonstruiert.

In anderen Fällen ist es von Vorteil, wenn die Aussenkontur des Ersatzstückes durch Subtraktion von Messdaten für das unbearbeitete beschädigte Bauteil und Messdaten für das bearbeitete beschädigte Bauteil virtuell rekonstruiert wird.

Weiterhin ist es denkbar, dass im Rahmen der Erfindung beim Bearbeitungsprozess ein Ausschnitt-Teil erhalten wird, und zur Weiterverwendung seiner Geometrie das Ausschnitt-Teil ausgemessen wird.

Insbesondere kann die innere Kontur des Ersatzstückes durch Verwendung der Messdaten des bearbeiteten und/oder unbearbeiteten beschädigten Bauteils und/oder eines Ausschnitt-Teils virtuell rekonstruiert werden.

In diesem Zusammenhang ist es vorteilhaft, wenn eine virtuelle Rekonstruktion des Ersatzstückes durch Kombination seiner erhaltenen äusseren und inneren Kontur erzeugt wird.

Eine andere Ausgestaltung der Erfindung zeichnet sich dadurch aus, dass das CAD-Modell des Ersatzstückes Informationen der äusseren Kontur, der inneren Struktur und Kühlluftlöcher auf der Basis von Messdaten umfasst.

Weiterhin ist es im Rahmen der Reparatur denkbar, dass die Geometrie des Ersatzstückes durch Reverse Engineering für spezielle Beschädigungen oder zum erfüllen spezieller neuer Anforderungen modifiziert wird.

Eine andere Ausgestaltung der Erfindung ist dadurch gekennzeichnet, dass das Ersatzstück auf der Basis der erzeugten Zeichnungen beziehungsweise digitalen Modelle hergestellt wird.

Gemäss einer weiteren Ausgestaltung wird das Ersatzstück durch Giessen, ein generatives Verfahren oder durch einen maschinellen Bearbeitungsprozess hergestellt.

Vorzugsweise wird das Ersatzstück durch ein selektives Laserschmelzen als generatives Verfahren hergestellt.

Das Ersatzstück kann aber auch durch eine maschinelle Bearbeitung, insbesondere durch Fräsen oder elektrochemische Bearbeitung, hergestellt werden.

Weiterhin ist es denkbar, dass die Kontur des Ersatzstückes zur Präparation der Kontaktflächen vor dem Fügen nachbearbeitet wird.

Vorzugsweise kann die Nachbearbeitung der Kontur durch adaptive Bearbeitung in Abhängigkeit von der benötigten Spalttoleranz des Fügeprozesses und der Herstellungstoleranz des Ersatzstückes durchgeführt werden.

Es ist aber auch denkbar, dass zusätzliche geometrische Strukturen, die nicht bei der Herstellung des Ersatzstückes erzeugt werden können, durch eine maschinelle Nachbearbeitung des Ersatzstückes erzeugt werden.

Gemäss einer weiteren Ausgestaltung der Erfindung wird das hergestellte Ersatzstück mit dem Bauteil durch manuelles Schweissen oder automatisches Schweissen oder Hochtemperaturlöten oder eine Kombination davon stoffschlüssig verbunden.

Bevorzugt wird das hergestellte Ersatzstück mit dem Bauteil durch Hochtemperaturlöten verbunden.

Eine weitere Ausgestaltung der Erfindung ist dadurch gekennzeichnet, dass nach dem Fügen von Bauteil und Ersatzstück eine Nachbearbeitung der Kontur vorgenommen wird. Die Nachbearbeitung erfolgt dabei vorzugsweise durch eine adaptive maschinelle Bearbeitung bzw. adaptiv und maschinell.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Flussdiagramm den Verfahrensablauf gemäss verschiedener Ausführungsbeispiele der Erfindung;
- Fig. 2: in mehreren Teilfiguren 2a bis 2e Schritte bei einem Ausführungsbeispiel des erfindungsgemässen Verfahrens, bei dem das beschädigte Bauteil nur einmal nach Einbringen des Ausschnitts gescannt wird; und
- Fig. 3: in mehreren Teilfiguren 3a bis 3e Schritte bei einem anderen Ausführungsbeispiel des erfindungsgemässen Verfahrens, bei dem das beschädigte Bauteil im unbearbeiteten Zustand und nach Einbringen des Ausschnitts gescannt wird.

### WEGE ZUR AUSFÜHRUNG DER ERFINDUNG

Bei dem vorgeschlagenen Verfahren zur Reparatur eines ausgebauten Bauteils, insbesondere aus dem Heissgasbereich einer Gasturbine, wird der beschädigte Bereich mittels Methoden bearbeitet, die einen Minimum an Materialverlust beim Herausschneiden des Bereichs ermöglichen, der dann durch ein passendes Ersatzstück ersetzt wird. Dieses Ersatzstück kann durch einen generativen Herstellungsprozess ("rapid manufacturing process") wie zum Beispiel selektives Laserschmelzen (SLM), selektives Lasersintern (SLS), Elektronenstrahlschmelzen (EBM) oder Standardmethoden wie zum Beispiel ein Wachsausschmelzverfahren oder einen Bearbeitungsprozess wie zum Beispiel Fräsen hergestellt werden.

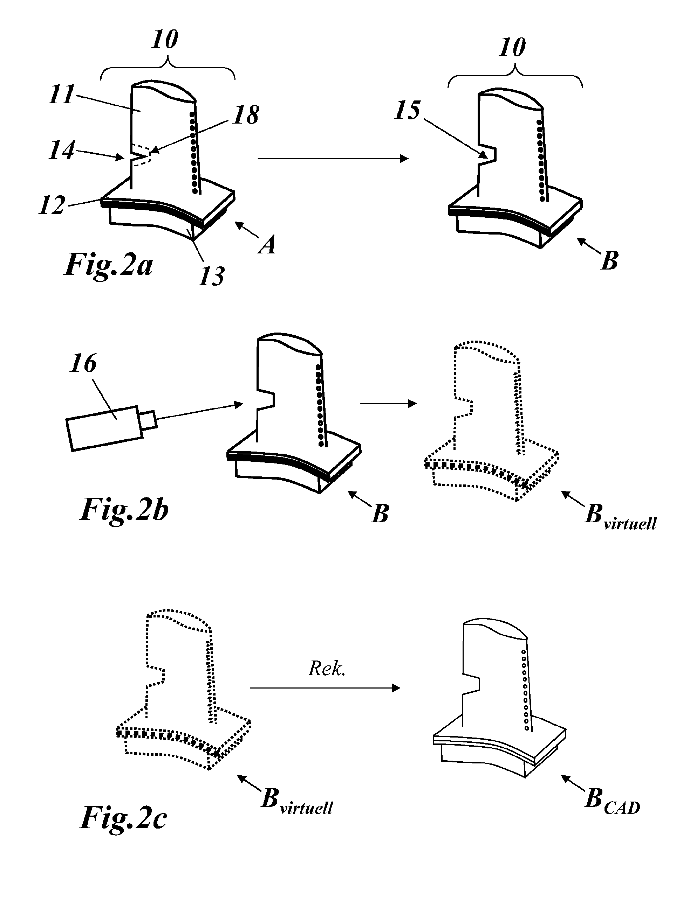

In einer vorteilhaften Ausführungsform der Erfindung (Fig. 2a-e) wird der beschädigte Bereich 14 des beschädigten Bauteils 10 (A in Fig. 2a), im Beispiel eine Gasturbinenschaufel mit einem Schaufelblatt 11, einer Plattform 12 und einem Schaufelfuss 13, durch einen Bearbeitungsprozess entfernt (Fig. 2a), der vorzugsweise einen vernachlässigbaren Einfluss auf den Schneidbereich hat (keine Oxidation, kleine Wärmeeinflusszone WEZ). Nach dem Bearbeitungsprozess wird das bearbeitete Bauteil 10 (B in Fig. 2a) mit dem eingebrachten Ausschnitt 15 durch ein mechanisch oder optisch tastendes Verfahren vermessen (mit einem Scanner 16 gescannt; siehe Fig. 2b).

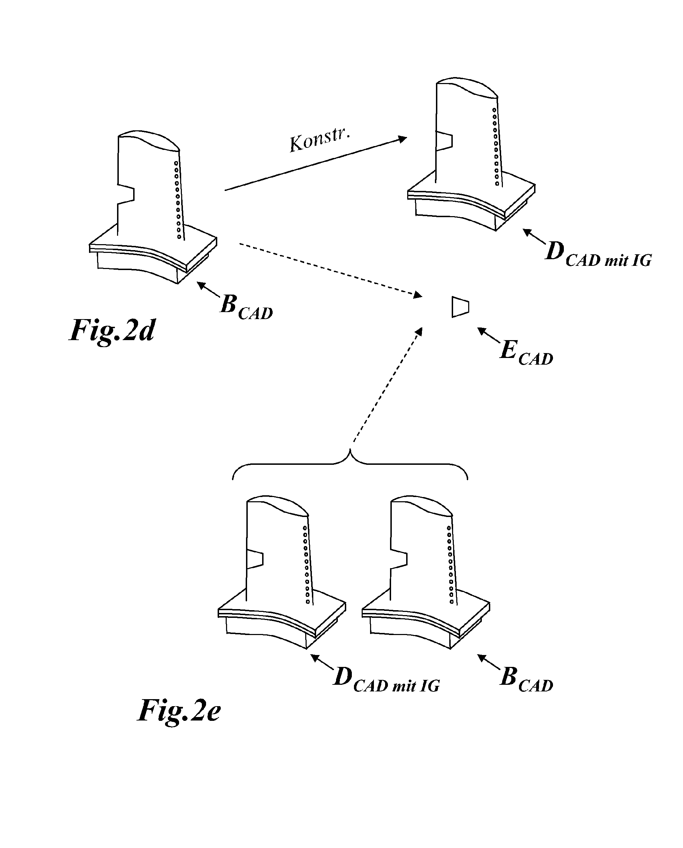

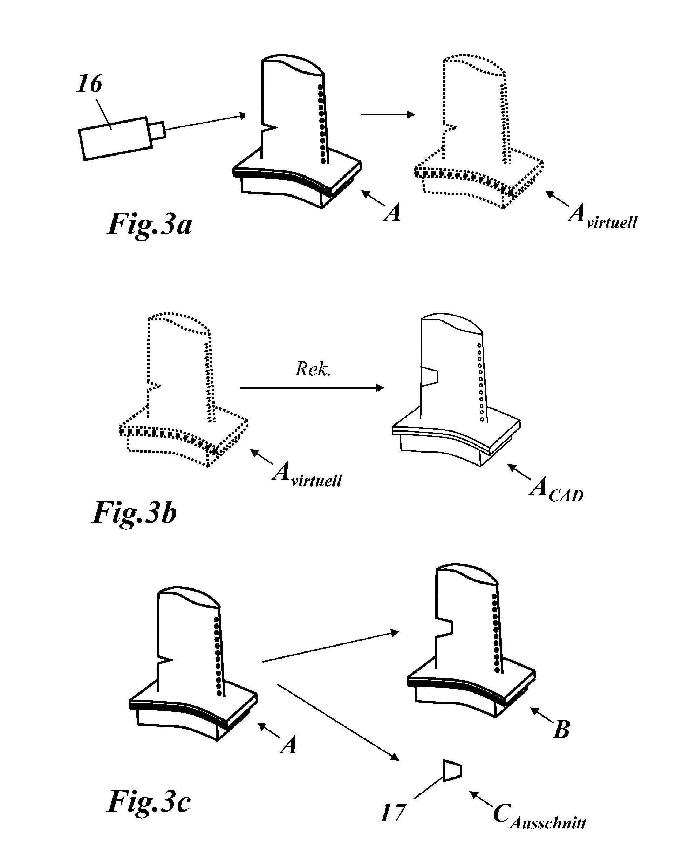

Auf Basis der dabei gewonnenen Messdaten (virtuelles bearbeitetes Bauteil Bᵥᵢᵣₜᵤₑₗₗ in Fig. 2b) kann ein entsprechendes CAD-Modell B_{CAD} erzeugt werden (Fig. 2c), aus dem sowohl ein CAD-Modell des Bauteils mit innerer Geometrie IG D_{CAD mit IG} als auch ein CAD-Modell E_{CAD} des Ersatzstückes abgeleitet werden kann (Fig. 2d). Falls die innere Geometrie IG sehr komplex ist, kann es aber auch notwendig sein, dass herausgeschnittene Ausschnitt-Teil (10 in Fig. 3c) abzuscannen und die dabei gewonnenen Daten zusätzlich für die Rekonstruktion zu verwenden.

Der endgültige CAD-Datensatz E_{CAD} des Ersatzstückes wird virtuell rekonstruiert durch Kombination der äusseren Kontur und der inneren Kontur des Ausschnitt-Teils, indem das CAD-Modell des Bauteils mit innerer Geometrie IG, D_{CAD mit IG,} und das CAD-Modell des bearbeiteten Bauteils, B_{CAD}, miteinander kombiniert werden (Fig. 2e). Damit schliesst der resultierende Geometrie-Datensatz des Ersatzstückes Information über die innere Oberfläche, mögliche Störungen, lokale Änderungen der Wanddicke und Positionen von Kühlluftlöchern des ausgebauten Bauteils ein.

Eine zusätzliche Herstellungstoleranz kann im Bereich der Trennlinie zum Geometrie-Datensatz des Ausschnitt-Teils beziehungsweise des Ersatzstückes hinzugefügt werden. Hierdurch wird eine Kompensation für den Materialverlust beim Schneiden und beim Präparieren der Trennlinie-Oberfläche und, wenn nötig, eine abschliessende oder individuelle Anpassung eines Standard-Ersatzstückes an das individuelle, zu reparierende, ausgebaute Bauteil ermöglicht.

Bei einer anderen Ausführungsform der Erfindung (Fig. 3a-e) wird ein stark beschädigtes ausgebautes Bauteil A zunächst durch ein mechanisch oder optisch tastendes Verfahren vermessen (mit einem Scanner 16 gescannt; siehe Fig. 3a), bevor der beschädigte Bereich durch einen Bearbeitungsprozess entfernt wird, um die aktuellen, nicht parametrisierten Geometriedaten dieses Bauteils zu erhalten, wobei auf Basis der dabei gewonnenen Messdaten (virtuelles beschädigtes Bauteil Aᵥᵢᵣₜᵤₑₗₗ in Fig. 3a) ein entsprechendes CAD-Modell A_{CAD} erzeugt wird (Fig. 3b).

Nach dem Scannen wird der beschädigte Bereich durch einen Bearbeitungsprozess entfernt (Fig. 3c), der wiederum vorzugsweise einen vernachlässigbaren Einfluss auf den Schneidbereich hat (keine Oxidation, kleine Wärmeeinflusszone WEZ). Dieses Vorgehen wird gewählt, wenn im beschädigten Bereich Merkmale vorhanden sind, die durch den Bearbeitungsprozess verloren gehen würden.

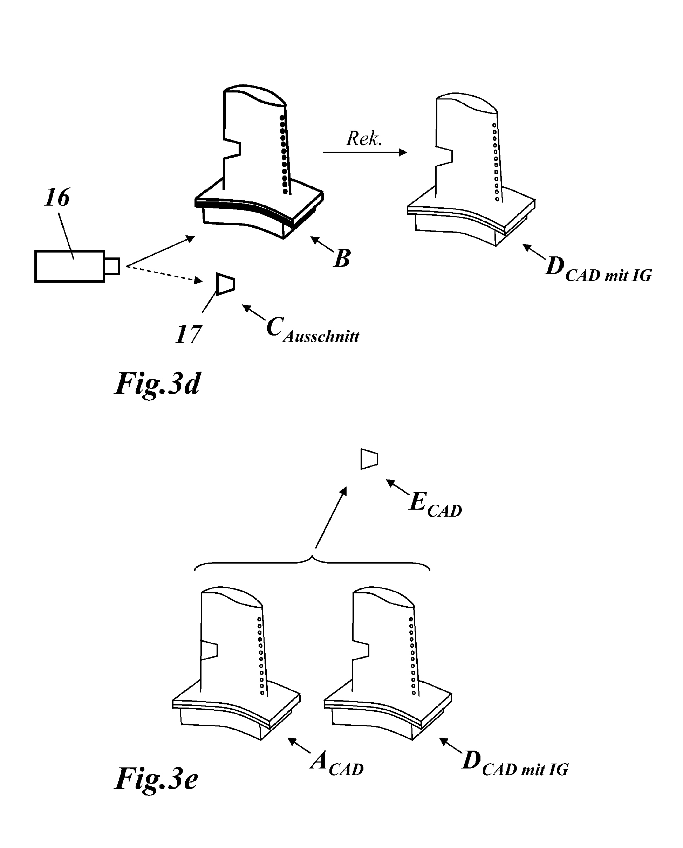

Nach dem Bearbeitungsprozess wird das bearbeitete Bauteil B mit dem Ausschnitt ein zweites Mal durch ein mechanisch oder optisch tastendes Verfahren vermessen (mit einem Scanner 16 gescannt; siehe Fig. 3d). Auf Basis der dabei gewonnenen Messdaten kann ein entsprechendes CAD-Modell des Bauteils mit innerer Geometrie IG, D_{CAD} mit IG, erzeugt werden (Fig. 3d). Basierend auf den Messdaten für das Bauteil mit und ohne beschädigten Bereich (A_{CAD} bzw. D_{CAD} mit _{IG}) kann eine Subtraktion durchgeführt werden (Fig. 3e), um die äussere Kontur des Ersatzstückes zu erhalten. Die innere Kontur des Ersatzstückes wird virtuell rekonstruiert, z.B. durch Verwendung von Messdaten des Bauteils mit und ohne Ausschnitt und/oder durch Verwendung von Messdaten des entfernten Ausschnitt-Teils C_{Ausschnitt} (siehe gestrichelten Pfeil in Fig. 3d).

Der endgültige CAD-Datensatz des Ersatzstückes wird virtuell rekonstruiert durch Kombination der äusseren Kontur und der inneren Kontur des Ausschnitt-Teils. Dadurch umfasst der resultierende Geometrie-Datensatz des Ersatzstückes Information über die innere Oberfläche, mögliche Störungen, lokale Änderungen der Wanddicke und Positionen von Kühlluftlöchern des ausgebauten Bauteils.

Auch hier kann eine zusätzliche Herstellungstoleranz im Bereich der Trennlinie zum Geometrie-Datensatz des Ausschnitt-Teils beziehungsweise des Ersatzstückes hinzugefügt werden. Hierdurch wird eine Kompensation für den Materialverlust beim Schneiden und beim Präparieren der Trennlinie-Oberfläche und, wenn nötig, eine abschliessende oder individuelle Anpassung eines Standard-Ersatzstückes an das individuelle, zu reparierende, ausgebaute Bauteil ermöglicht.

Auf der Basis des erzeugten Geometrie-Datensatzes des Ersatzstückes kann dieses durch einen generativen Herstellungsprozess ("rapid manufacturing process") wie zum Beispiel selektives Laserschmelzen (SLM), selektives Lasersintern (SLS), Elektronenstrahlschmelzen (EBM) oder Laserauftragsschweissen (DMD) hergestellt werden. Auch Standardmethoden wie zum Beispiel ein Wachsausschmelzverfahren oder ein Bearbeitungsprozess wie zum Beispiel Fräsen können eingesetzt werden. Die Entscheidung über die angewendete Herstelltechnologie hängt auch vom Grad der Beschädigung, der Stückzahl und der Komplexität des Ausschnitt-Teils ab.

Vor der Verbindung des hergestellten Ersatzstückes mit dem ausgebauten Bauteil kann jedes Ersatzstück in der Kontur bearbeitet werden, um optimale Bedingungen an der Trennlinieoberfläche für den abschliessenden Fügeprozess zu erreichen (zum Beispiel Rauhigkeit, Spaltgeometrie/Spalttoleranz). Abhängig von ausgewählten Vorgehen kann der Kontur-Bearbeitungsschritt durch Entfernung einer konstanten Dicke oder durch individuelle, adaptive Bearbeitung erfolgen. Neben der Konturbearbeitung können in Abhängigkeit vom Bearbeitungsprozess andere, dem Fügen vorangehende Schritte notwendig sein, wie zum Beispiel Temperaturbehandlungen zur Verbesserung der Schweissbarkeit oder Spannungsarmglühen von durch generative Verfahren hergestellten Ersatzstücken.

Das Fügen des hergestellten Ersatzstückes und des Bauteils kann mit herkömmlichen Fügeprozessen wie zum Beispiel Löten oder Schweissen oder einer Kombination von beiden durchgeführt werden. Darüber hinaus kann eine abschliessende Temperaturbehandlung und Nachbearbeitung am Schluss der Rekonditionierungskette des Bauteils ausgeführt werden.

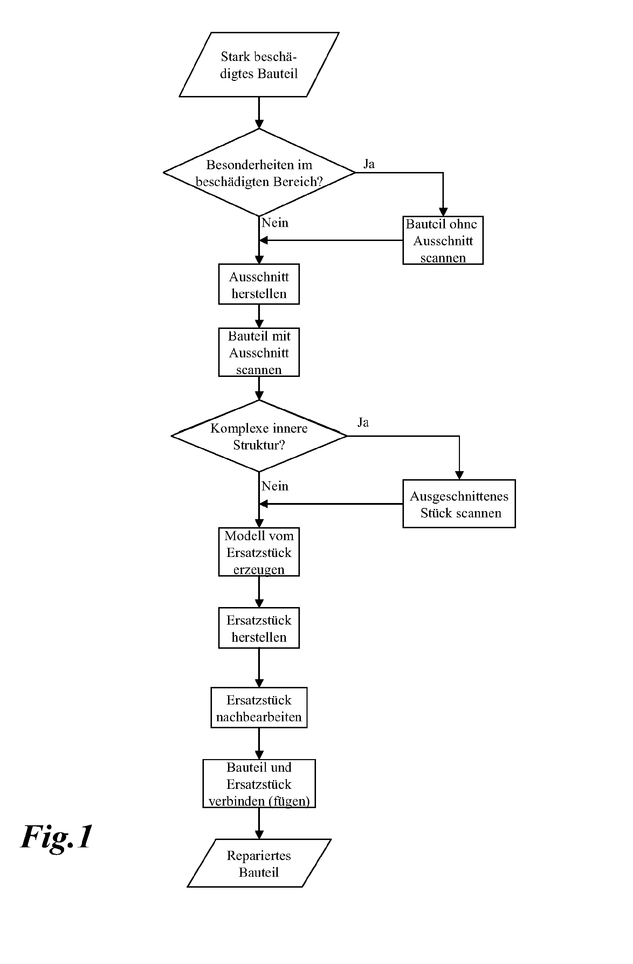

Die verschiedenen Möglichkeiten des Verfahrens nach der Erfindung lassen sich in einem Flussdiagramm übersichtlich zusammenfassen, wie es in Fig. 1 wiedergegeben ist. Das in Fig. 1 dargestellte Flussdiagramm geht aus von einem stark beschädigten Bauteil, welches einen Bereich mit einer Beschädigung 14 aufweist (siehe Fig. 2a). Liegen in dem beschädigten Bereich Besonderheiten vor, wird das beschädigte Bauteil ohne vorherige Bearbeitung beziehungsweise ohne Ausschneiden des beschädigten Bereichs (Ausschnitt) ausgemessen. Dies geschieht vorzugsweise durch einen 3D-Scanprozess. Liegen in dem beschädigten Bereich dagegen keine Besonderheiten vor, wird das beschädigte Bauteil direkt der genannten Bearbeitung unterzogen, wobei durch Entfernen des beschädigten Bereichs ein Ausschnitt (15 in Fig. 2a) hergestellt wird.

Das so bearbeitete Bauteil mit dem Ausschnitt wird in beiden Fällen (wiederum durch einen 3D-Scanprozess) ausgemessen, um einen entsprechenden Satz von Messdaten zu erzeugen. Hat das aus dem Bauteil entfernte Ausschnitt-Teil (17 beziehungsweise C_{Ausschnitt} in Fig. 3d) eine komplexe innere Struktur, wird dieses Ausschnitt-Teil ebenfalls durch Scannen ausgemessen. Liegt eine solche komplexe innere Struktur nicht vor, wird ein CAD-Modell des Ersatzstückes aus den vorher ermittelten Messdaten erzeugt und ein entsprechendes Ersatzstück nach diesem CAD-Modell hergestellt.

Das hergestellte Ersatzstück wird dann im Hinblick auf für das Fügen geeignete Oberflächen beziehungsweise benötigte Toleranzen oder zusätzliche Eigenschaften nachbearbeitet. Das nachbearbeitete Ersatzstück wird dann mit dem bearbeiteten Bauteil durch Fügen stoffschlüssig miteinander verbunden, um schliesslich ein repariertes Bauteil zu erhalten.

Mit dem erfindungsgemässen Verfahren ergeben sich folgende Eigenschaften und Vorteile:
• ein parametrisiertes CAD-Modell des Bauteils wird nicht benötigt;
• ein parametrisiertes CAD-Modell des Ausschnitt-Teils wird nicht benötigt;
• charakteristische Eigenschaften des beziehungsweise Informationen über das Ausschnitt-Teil(s) aufgrund des betrieblichen Einsatzes werden mit dem Scannen des ausgebauten Bauteils erhalten und können systematisch ausgewertet werden; dies ermöglicht insbesondere über eine längere Zeit gesehen eine statistische Auswertung der Beschädigungs- und Verformungsmuster;
• der Aufwand kann reduziert werden, indem das beschädigte Bauteil nur einmal ausgemessen wird;
• das zweimalige Scannen vor und nach der Bearbeitung des Bauteils ermöglicht eine bessere Datenbasis für die virtuelle Rekonstruktion des Ersatzstückes;
• das Scannen des Bauteils vor der Bearbeitung ermöglicht die Definition einer individuellen Schnittlinie und eine Bearbeitung auf Basis dieser Messdaten;
• die Flexibilität wird verbessert und die Ausschussrate reduziert;
• die Handhabung wird vereinfacht; und
• ein Reverse Engineering ganzer Bauteile ist nicht notwendig, da keine parametrisierten CAD-Modelle benötigt werden.

### BEZUGSZEICHENLISTE

- 10: Bauteil (Gasturbinenschaufel)
- 11: Schaufelblatt
- 12: Plattform
- 13: Schaufelfuss
- 14: Beschädigung (beschädigter Bereich)
- 15: Ausschnitt
- 16: Scanner
- 17: Ausschnitt-Teil
- 18: Schnittlinie
- A: beschädigtes Bauteil
- Aᵥᵢᵣₜᵤₑₗₗ: virtuelles beschädigtes Bauteil (gescannt)
- A_{CAD}: CAD-Modell des rekonstruierten Bauteils
- B: bearbeitetes Bauteil (mit Ausschnitt)
- Bᵥᵢᵣₜᵤₑₗₗ: virtuelles bearbeitetes Bauteil (gescannt)
- B_{CAD}: CAD-Modell des bearbeiteten Bauteils
- C_{Ausschnitt}: Ausschnitt-Teil
- D_{CAD mit IG}: CAD-Modell des Bauteils mit innerer Geometrie IG
- E_{CAD}: CAD-Modell des Ersatzstückes

## Patentansprüche

1. Verfahren zum Reparieren bzw. Rekonditionieren eines stark beschädigten Bauteils (10), insbesondere aus dem Heissgasbereich einer Gasturbine, **gekennzeichnet durch** folgende Schritte:
a) Bearbeiten des beschädigten Bauteils (10) **durch** Entfernen des beschädigten Bereichs (14) aus dem Bauteil (10) unter Erzeugung eines entsprechendes Ausschnitts (15) im Bauteil (10);
b) Ausmessen des mit dem Ausschnitt (15) versehenen bearbeiteten Bauteils (B);
c) Erstellen eines CAD-Modells (E_{CAD}) eines Ersatzstückes zum Einsetzen in den Ausschnitt (15) des bearbeiteten Bauteils (B);
d) Herstellen des Ersatzstückes nach Massgabe des erstellten CAD-Modells (E_{CAD}), und
e) Verbinden des hergestellten Ersatzstückes und des bearbeiteten Bauteils (B) **durch** Fügen.

2. Verfahren nach Anspruch 1, **dadurch gekennzeichnet, dass** zum Ausschneiden des beschädigten Bereichs (14) eine individuelle Schnittlinie (18) definiert wird.

3. Verfahren nach Anspruch 1 oder 2, **dadurch gekennzeichnet, dass** das Entfernen des beschädigten Bereichs (14) durch einen Bearbeitungsprozess erfolgt.

4. Verfahren nach Anspruch 3, **dadurch gekennzeichnet, dass** als Bearbeitungsprozess ein EDM-Prozess eingesetzt wird.

5. Verfahren nach Anspruch 3, **dadurch gekennzeichnet, dass** als Bearbeitungsprozess ein Fräsprozess eingesetzt wird.

6. Verfahren nach einem der Ansprüche 3-5, **dadurch gekennzeichnet, dass** der Bearbeitungsprozess ohne Rücksicht auf den Erhalt der Geometrie eines Ausschnitt-Teils (C_{Ausschnitt}) durchgeführt wird.

7. Verfahren nach Anspruch 2, **dadurch gekennzeichnet, dass** als Schnittlinie (18) eine komplexe Linie verwendet wird.

8. Verfahren nach Anspruch 1, **dadurch gekennzeichnet, dass** das beschädigte Bauteil (10) vor der Bearbeitung ebenfalls ausgemessen wird.

9. Verfahren nach Anspruch 1-8, **dadurch gekennzeichnet, dass** das Ausmessen mittels eines mechanisch oder optisch tastenden Verfahrens durchgeführt wird.

10. Verfahren nach Anspruch 9, **dadurch gekennzeichnet, dass** zum Ausmessen ein 3-D-Scanverfahren eingesetzt wird.

11. Verfahren nach einem der Ansprüche 1-10, **dadurch gekennzeichnet, dass** die Aussenkontur des Ersatzstückes auf der Basis von Messdaten durch CAD-Modellierung virtuell rekonstruiert wird.

12. Verfahren nach Anspruch 8, **dadurch gekennzeichnet, dass** die Aussenkontur des Ersatzstückes durch Subtraktion von Messdaten für das unbearbeitete beschädigte Bauteil (A) und Messdaten für das bearbeitete beschädigte Bauteil (B) virtuell rekonstruiert wird.

13. Verfahren nach Anspruch 3, **dadurch gekennzeichnet, dass** beim Bearbeitungsprozess ein Ausschnitt-Teil (C_{Ausschnitt}) erhalten wird, und dass zur Weiterverwendung seiner Geometrie das Ausschnitt-Teil (C_{Ausschnitt}) ausgemessen wird.

14. Verfahren nach Anspruch 1, **dadurch gekennzeichnet, dass** die innere Kontur des Ersatzstückes durch Verwendung der Messdaten des bearbeiteten (B) und/oder unbearbeiteten (A) beschädigten Bauteils (10) und/oder eines Ausschnitt-Teils (C_{Ausschnitt}) virtuell rekonstruiert wird.

15. Verfahren nach Anspruch 14, **dadurch gekennzeichnet, dass** eine virtuelle Rekonstruktion des Ersatzstückes durch Kombination seiner erhaltenen äusseren und inneren Kontur erzeugt wird.

16. Verfahren nach Anspruch 11, **dadurch gekennzeichnet, dass** das CAD-Modell des Ersatzstückes Informationen der äusseren Kontur, der inneren Struktur und Kühlluftlöcher auf der Basis von Messdaten umfasst.

17. Verfahren nach Anspruch 11, **dadurch gekennzeichnet, dass** die Geometrie des Ersatzstückes durch Reverse Engineering für spezielle Beschädigungen oder zum erfüllen spezieller neuer Anforderungen modifiziert wird.

18. Verfahren nach einem der Ansprüche 1-17, **dadurch gekennzeichnet, dass** das Ersatzstück auf der Basis der erzeugten Zeichnungen beziehungsweise digitalen Modelle hergestellt wird.

19. Verfahren nach einem der Ansprüche 1-17, **dadurch gekennzeichnet, dass** das Ersatzstück durch Giessen, ein generatives Verfahren oder durch einen maschinellen Bearbeitungsprozess hergestellt wird.

20. Verfahren nach Anspruch 19, **dadurch gekennzeichnet, dass** als generative Verfahren ein selektives Laserschmelzen eingesetzt wird.

21. Verfahren nach Anspruch 19, **dadurch gekennzeichnet, dass** als maschineller Bearbeitungsprozess Fräsen oder elektrochemische Bearbeitung eingesetzt werden.

22. Verfahren nach einem der Ansprüche 18-21, **dadurch gekennzeichnet, dass** die Kontur des Ersatzstückes zur Präparation der Kontaktflächen vor dem Fügen nachbearbeitet wird.

23. Verfahren nach Anspruch 22, **dadurch gekennzeichnet, dass** die Nachbearbeitung der Kontur durch adaptive Bearbeitung in Abhängigkeit von der benötigten Spalttoleranz des Fügeprozesses und der Herstellungstoleranz des Ersatzstückes durchgeführt wird.

24. Verfahren nach einem der Ansprüche 18-23, **dadurch gekennzeichnet, dass** zusätzliche geometrische Strukturen, die nicht bei der Herstellung des Ersatzstückes erzeugt werden können, durch eine maschinelle Nachbearbeitung des Ersatzstückes erzeugt werden.

25. Verfahren nach einem der Ansprüche 1-24, **dadurch gekennzeichnet, dass** das hergestellte Ersatzstück mit dem Bauteil (10) durch manuelles Schweissen oder automatisches Schweissen oder Hochtemperaturlöten oder eine Kombination davon stoffschlüssig verbunden wird.

26. Verfahren nach einem der Ansprüche 1-25, **dadurch gekennzeichnet, dass** nach dem Fügen von Bauteil (10) und Ersatzstück eine Nachbearbeitung der Kontur vorgenommen wird.

27. Verfahren nach Anspruch 26, **dadurch gekennzeichnet, dass** die Nachbearbeitung durch eine adaptive maschinelle Bearbeitung bzw. adaptiv und maschinell erfolgt.
